# EUROPEAN PATENT APPLICATION

(11) **EP 4 772 342 A1**
(43) Date of publication of application: **08.07.2026**
(21) Application number: 25219615.9
(22) Date of filing: 01.12.2025
(51) Int. Cl.: B32B 7/12, B32B 27/08, B32B 27/10, B32B 27/28, B32B 27/30, B32B 27/32, B32B 27/34, B32B 27/36, B32B 27/40, B32B 29/00, B32B 15/08, B32B 15/082, B32B 15/085, B32B 15/088, B32B 15/09, B32B 15/12, B32B 15/20, B32B 1/00

(54) **TWO-PIECE TYPE CLOSURE LINER**

(30) Priority: 06.01.2025 TW 114100511; 11.08.2025 TW 114130547
(71) Applicant: Yang, Yen-Wu, 221 New Taipei City (TW)
(72) Inventor: Yang, Yen-Wu, 221 New Taipei City (TW)
(74) Representative: DTS Patent- und Rechtsanwälte PartmbB

(57) **Abstract**

The present application provides a two-piece type closure liner (50; 100; 200; 300; 300'; 400; 500; 500'), which includes: a backing layer (1), which is a cardboard or a foaming board film; a sealing laminated layer (3; 3'), which sequentially from top to bottom includes an electromagnetic induction heating layer (31) and a sealing layer (32); a weak adhesive layer (2), which is located between the backing layer (1) and the sealing laminated layer (3; 3'), so that a peeling strength between the backing layer (1) and the sealing laminated layer (3; 3'), measured by a standard of ASTM D903, is 0.05N/15mm or more and 2.26N/15mm or less. By the above-mentioned two-piece type closure liner (50; 100; 200; 300; 300'; 400; 500; 500'), the effect of carbon reduction and saving energy consumption can be achieved.

## Description

### BACKGROUND OF THE INVENTION

### 1. Field of the Invention

The present disclosure relates to a two-piece type closure liner.

### 2. Description of the Related Art

In a general two-piece type closure liner (especially a closure liner containing cardboard and aluminum foil), it includes cardboard, a wax layer, aluminum foil and a heating sealing glue layer from top to bottom. After electromagnetic induction heating, the wax layer that is fully coated (coating amount is about 25g/m² to 40g/m²) will be melted and absorbed by the cardboard, and the aluminum foil will be sealed and attached to the container opening through the heating sealing glue layer, and the cardboard will be stuck in the bottle cap.

By using the conventional two-piece type closure liner to seal the container opening through cardboard and aluminum foil, it can achieve the effect of preventing the contents from leaking out and preserving the contents.

### BRIEF SUMMARY OF THE INVENTION

However, in the conventional two-piece type closure liner, although most of the wax layer will be absorbed by the cardboard, once the diameter of the closure liner is greater than 42mm, when the bottle cap is opened after electromagnetic induction sealing, it is often seen that there is still residual wax on the bottle opening stuck to the aluminum foil, or the cardboard is stuck to the aluminum foil and cannot be separated, which creates a very bad impression for the user. Moreover, in order to seal again, even if the cardboard is stuffed back into the bottle cap with the fingers, not only will the fingers contaminate the cardboard, but also the pure cardboard left in the bottle cap will not have the function of resealing, and the pure cardboard can neither block oxygen nor moisture.

Therefore, in order to solve the above-mentioned problems encountered by the conventional two-piece type closure liner, it is necessary to develop a two-piece type closure liner, after the two-piece type closure liner is sealed, the backing layer and the sealing laminated layer can be easily separated, and the backing layer left in the bottle cap also has the function of resealing, so it becomes the problem that the technical field is eager to solve.

In order to solve the above-mentioned problem, a two-piece type closure liner of an aspect of the present disclosure includes: a backing layer, which is a cardboard or a foaming board film; a sealing laminated layer, which sequentially from top to bottom includes an electromagnetic induction heating layer and a sealing layer; a weak adhesive layer, which is located between the backing layer and the sealing laminated layer, so that a peeling strength between the backing layer and the sealing laminated layer, measured by a standard of ASTM D903, is 0.05N/15mm or more and 2.26N/15mm or less.

In an embodiment, the two-piece type closure liner further includes a release layer, which is located below the weak adhesive layer, the material of the release layer includes a fully-coated or dot-coated gloss oil or silicone oil.

In an embodiment, the two-piece type closure liner further includes a barrier layer, which is located above the weak adhesive layer, and the material of the barrier layer is at least one selected from the group consisting of PET, polyamide (PA), polyvinylidene chloride (PVDC) and ethylene vinyl alcohol copolymer (EVOH).

In an embodiment, the material of the weak adhesive layer includes polyolefin; alternatively, the material of the weak adhesive layer includes polyurethane; or, the material of the weak adhesive layer includes wax, and a coating method of the weak adhesive layer is dot coating or full coating.

In an embodiment, the sealing layer is hot melt glue or a combination of a sealing film and an adhesive, and the hot melt glue is at least one selected from the group consisting of polyethylene (PE), polypropylene (PP), ethylene vinyl acetate copolymer (EVA), polyisobutylene (PIB), ethylene-ethyl acrylate (EEA), ethylene acrylic acid copolymer (EAA), ethylene methacrylic acid copolymer (EMAA), ethylene methyl methacrylate copolymer (EMMA), ethylene methyl acrylate copolymer (EMAC), polyacrylate, polyacetate and ethylene butyl acrylate (EBA); the sealing film is at least one selected from the group consisting of paper, polyethylene (PE), polypropylene (PP), polyamide (PA), polyvinylidene chloride (PVDC), ethylene vinyl alcohol copolymer (EVOH) and polyethylene terephthalate (PET); and the adhesive is located between the electromagnetic induction heating layer and the sealing film.

In an embodiment, the weak adhesive layer and the electromagnetic induction heating layer therebetween further sequentially include: a surface film, having a composition including at least one of the groups consisting of PP, PET, PE, polyamide (PA), PEN and polyimide (PI); a super strong adhesive; a bonding film, laminated with the surface film through the super strong adhesive, and having a composition including at least one of the groups consisting of PET, PE, PP, PA, EPP and EPE; also, the super strong adhesive makes the peeling strength between the surface film and the bonding film greater than 17.8N/15mm. Also, in an embodiment, the release layer and the electromagnetic induction heating layer therebetween further sequentially include the above-mentioned surface film, the above-mentioned super strong adhesive and the above-mentioned bonding film.

Also, in an embodiment, the super strong adhesive is used to laminate the surface film and a part of the bonding film, and the material of super strong adhesive is dry compound adhesive or hot melt lamination glue, and the material of the hot melt lamination glue is at least one selected from the group consisting of PE, PP, EMAC, EMAA, EEA, EAA and EMMA.

In an embodiment, the two-piece type closure liner further includes a half moon tab layer, laminated below the surface film through the super strong adhesive, and the material of the half moon tab layer may be at least one selected from the group consisting of paper, PET, PP, PA, PEN and PI, but is not limited thereto. Also, a thickness of the half moon tab layer is preferably 12µm to 50µm, and a width of the half moon tab layer is between 1/6 and 5/6 times a diameter of the two-piece type closure liner.

In addition, in an embodiment, one side of the backing layer facing the electromagnetic induction heating layer has a polyolefin film laminating layer, and the polyolefin is at least one of the groups consisting of polyethylene, polypropylene, polypentene and polyhexene.

In an embodiment, the electromagnetic induction heating layer is aluminum foil or a wireless information integrated flake.

Also, in an embodiment, the wireless information integrated flake includes: a base film; an information and heating layer, including an information area and an electromagnetic induction heating ring; and a first adhesive layer, located between the base film and the information and heating layer; wherein the information area has an antenna and a chip to be mutually conducted, and the electromagnetic induction heating ring surrounds the information area in a plan viewing angle.

In an embodiment, the wireless information integrated flake further includes: a protective layer, located on one side of the information and heating layer away from the base film; and a second adhesive layer, located between the information and heating layer and the protective layer.

Also, in an embodiment, a spacing is formed between the electromagnetic induction heating ring and the information area. Also, in an embodiment, the spacing is a space between the outermost edge of the information area and the innermost edge of the electromagnetic induction heating ring, and the space is 0.1mm to 3mm. Also, in a preferable embodiment, there is full of a spacing between the electromagnetic induction heating ring and the information area.

In an embodiment, the information and heating layer further includes at least one physical connection bridge, which is used to connect the information area and the electromagnetic induction heating ring.

On the other hand, in an embodiment, the weak adhesive layer and the sealing layer therebetween further sequentially include: a surface film, having a composition including at least one of the groups consisting of PP, PET, PE, PA, PEN and PI; a bonding film, having a composition including at least one of the groups consisting of PET, PE, PP, PA, EPP and EPE; and a strong adhesion layer; in addition, the two-piece type closure liner further includes a release block, the material of the release block may be at least one selected from the group consisting of wax, gloss oil and silicone oil, and the release block is located on the lower surface of the bonding film or located on the upper surface or the lower surface of the electromagnetic induction heating layer; the strong adhesion layer is dry compound adhesive or hot melt lamination glue, and makes the peeling strength between the bonding film and the electromagnetic induction heating layer greater than 12N/15mm.

In addition, in an embodiment, an upper surface of the surface film of the two-piece type closure liner includes: a lifting part; a lifting neck; and a hollow-out area, formed by cutting a hollow-out cutting line, the hollow-out area is located at a periphery of the lifting part, and the hollow-out area is connected with two sides of the lifting neck; wherein a thickness of the two-piece type closure liner corresponding to the hollow-out area is less than an overall thickness of the two-piece type closure liner; wherein the upper surface of the surface film of the two-piece type closure liner is provided with a tearing line, one end of the tearing line is connected with the lifting part, the other end of the tearing line is separated from an outermost circle of the two-piece type closure liner by a tearing spacing, the tearing spacing is greater than or equal to 0mm, and the tearing spacing is less than or equal to 20mm; wherein the tearing line is provided with at least one tearing and cutting breakpoint, the surface film corresponding to the at least one tearing and cutting breakpoint is not completely cut off in the vertical direction, and the surface film corresponding to the tearing line except for the at least one tearing and cutting breakpoint is completely cut off; and the release block is located on the lower surface of the bonding film corresponding to the lifting part, and the coating area of the release block is not less than the lifting part, or the release block is located on the upper surface or the lower surface of the electromagnetic induction heating layer corresponding to the lifting part, the lifting neck and the hollow-out area, and the coating area of the release block is not less than the lifting part and the hollow-out area.

**In** an embodiment, the lifting part, the lifting neck and the hollow-out area are all located in the same half of the two-piece type closure liner, the upper surface of the surface film of the two-piece type closure liner is further provided with a tearing and twisting cutting line, the tearing and twisting cutting line is connected with the lifting part, and the tearing line and the tearing and twisting cutting line are respectively connected with two ends of the lifting part.

The present inventors use the two-piece type closure liner of the present disclosure, and after sealing, the peeling strength between the backing layer (cardboard or foaming board film) and the electromagnetic induction heating layer, measured by a standard of ASTM D903, is 0.05N/15mm or more and 2.26N/15mm or less. In this way, if electromagnetic induction sealing is used, the energy required for the electromagnetic induction sealing will no longer be consumed in melting and absorbing the coated wax, which can achieve the effect of carbon reduction and saving energy consumption.

An aspect of the present disclosure is completed in view of the above-mentioned problem point of prior art, and the object is to provide a two-piece type closure liner, which can achieve the effect of carbon reduction and saving energy consumption. Also, in a preferable embodiment, the convenience of tearing by the user can be enhanced through the release layer and/or release area and/or release block.

According to the two-piece type closure liner of the present disclosure, because the backing layer and the sealing laminated layer are laminated through the weak adhesive layer, the peeling strength between the backing layer and the sealing laminated layer, measured by a standard of ASTM D903, is 0.05N/15mm or more and 2.26N/15mm or less. In this way, when the sealing film is bonded to the container opening of the product container by means of electromagnetic induction heating for sealing, the peeling strength between the backing layer and the sealing laminated layer is less than the clamping strength of the backing layer (for example, cardboard) stuck in the liner slot in the bottle cap (the clamping strength of the backing layer stuck in the liner slot in the bottle cap is preferably more than 2 times the peeling strength between the backing layer and the sealing laminated layer), and the peeling strength between the backing layer and the sealing laminated layer is also less than the adhesive strength between the sealing laminated layer and the container opening (the adhesive strength between the sealing laminated layer and the container opening is preferably more than 2 times the peeling strength between the backing layer and the sealing laminated layer), so that the backing layer and the sealing laminated layer can be easily separated. In this case, even if electromagnetic induction sealing is not used, but glue is applied to the container opening to bond the sealing film to the container opening, the peeling strength between the backing layer and the sealing laminated layer is less than the clamping strength of the backing layer stuck in the liner slot in the bottle cap, and is also less than the glue bonding strength between the sealing film (for example, the sealing film is paper) and the container opening, so that the backing layer and the sealing laminated layer can be easily separated.

### BRIEF DESCRIPTION OF THE DRAWINGS

FIG. 1 is a schematic sectional diagram of a two-piece type closure liner of an embodiment of the present disclosure.
FIG. 2 is a schematic sectional diagram of the two-piece type closure liner of another embodiment of the present disclosure.
FIG. 3A is a schematic sectional diagram of the two-piece type closure liner of further embodiment of the present disclosure.
FIG. 3B is a schematic sectional diagram of the two-piece type closure liner of still embodiment of the present disclosure.
FIG. 4 is a schematic sectional diagram of the sealing laminated layer of a modification example of the present disclosure.
FIG. 5A is a schematic sectional diagram of the two-piece type closure liner of still further embodiment of the present disclosure.
FIG. 5B is a schematic sectional diagram of the two-piece type closure liner of still more embodiment of the present disclosure.
FIG. 5C is a schematic sectional diagram of the two-piece type closure liner of still more embodiment of the present disclosure.
FIG. 6 is a schematic top view of the two-piece type closure liner of further embodiment of the present disclosure.
FIG. 7 is a schematic sectional diagram for illustrating the wireless information integrated flake of a first embodiment of the present disclosure.
FIG. 8A is a schematic plan diagram for illustrating an information and heating layer of an embodiment of the present disclosure.
FIG. 8B is a schematic plan diagram for illustrating the information and heating layer of another embodiment of the present disclosure.
FIG. 9A is a schematic plan diagram for illustrating an information area of an embodiment of the present disclosure.
FIG. 9B is a schematic plan diagram for illustrating the information area of another embodiment of the present disclosure.
FIG. 10 is a schematic sectional diagram for illustrating the wireless information integrated flake of a second embodiment of the present disclosure.
FIG. 11 is a schematic top view for illustrating the two-piece type closure liner of the present disclosure.
FIG. 12A to FIG. 12C are schematic top view for illustrating the two-piece type closure liner of other embodiment of the present disclosure.

### DETAILED DESCRIPTION OF THE INVENTION

The implementation of the present disclosure is illustrated by the specific embodiments as follows, so one skilled in the art may understand other advantages and effects of the present disclosure by the contents disclosed in the specification. The present disclosure may also be implemented or applied by other embodiments, and the details in the specification may also be modified and varied based on different views and applications without departing from the spirit of the present disclosure.

Unless otherwise specified herein, the term "A to B" used in the specification and the claims attached includes the meaning of "A or more and B or less". For example, the term "10wt% to 40wt%" includes the meaning of "10wt% or more and 40wt% or less".

### [First embodiment]

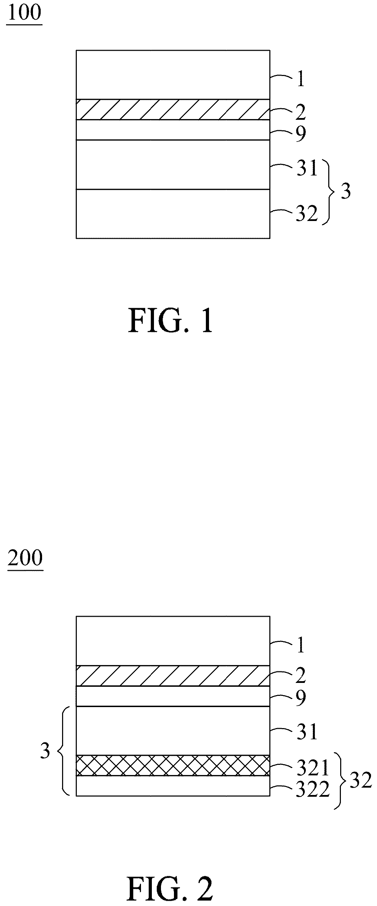

First, referring to FIG. 1, FIG. 1 is a schematic sectional diagram of a two-piece type closure liner 100 of an embodiment of the present disclosure. As shown in FIG. 1, the two-piece type closure liner 100 of an embodiment of the present disclosure includes: a backing layer 1, which is a cardboard or a foaming board film; a sealing laminated layer 3, which sequentially from top to bottom includes an electromagnetic induction heating layer 31 and a sealing layer 32; a weak adhesive layer 2, which is located between the backing layer 1 and the sealing laminated layer 3, so that a peeling strength between the backing layer 1 and the sealing laminated layer 3, measured by a standard of ASTM D903, is 0.05N/15mm or more and 2.26N/15mm or less. In addition, although a release layer 9 is shown in FIG. 1, the release layer 9 is not a necessary structure, that is, the release layer 9 can be omitted in each embodiment in the disclosure. Each layer is described in detail below.

### <<Backing film>>

The backing layer 1 is one of sealing layers of the two-piece type closure liner. In a preferable embodiment, one side of the backing layer 1 facing the electromagnetic induction heating layer has at least one polyolefin film laminating layer (not shown), which effectively isolates oxygen and moisture, resulting in a further sealing effect. Specifically, when the cap is opened after electromagnetic induction sealing, because of the polyolefin film laminating layer, the backing layer disposed in the bottle cap can create a resealing effect to prevent the contents from being corrupted and dampened, etc. Also, the polyolefin film laminating layer may be polyethylene, polypropylene, polypentene or polyhexene, etc., and a thickness of which is 4µm to 100µm, so that the contents of the container are not easily affected by moisture and oxygen. Next, the backing layer 1 may be a cardboard or a foaming board film. Also, a thickness of the cardboard may be 0.2mm to 2mm. In addition, a composition of the foaming board film includes expandable polyethylene (EPE) or expandable polypropylene (EPP), and a thickness of which is 0.2mm to 3mm.

### <<Weak adhesive layer>>

The weak adhesive layer 2 is used to laminate the backing layer 1 and the sealing laminated layer 3, specifically, the weak adhesive layer 2 is used to laminate a lower surface of the backing layer 1 (such as a lower surface of the cardboard) with an upper surface of the sealing laminated layer 3 (such as an upper surface of the electromagnetic induction heating layer). The weak adhesive layer 2 makes the peeling strength between the backing layer 1 and the sealing laminated layer 3, measured by a standard of ASTM D903, be 0.05N/15mm or more and 2.26N/15mm or less; thus, after electromagnetic induction heating, the backing layer 1 (e.g., cardboard) and the electromagnetic induction heating layer in the sealing laminated layer 3 can be formed into a closure liner that can be separated in two pieces. Specifically, the electromagnetic induction heating layer 31 is sealed and attached to the container opening through the sealing layer 32, and the backing layer 1 is disposed and stuck in the bottle cap.

In an embodiment, the material of the weak adhesive layer 2 includes polyolefin, including but not limited to polyethylene, polypropylene, polypentene, polyhexene, etc., and a thickness of which is 4µm to 100µm. Alternatively, in another embodiment, the material of the weak adhesive layer 2 includes polyurethane and a thickness of which is 0.5µm to 6µm. Or, in another embodiment, the material of the weak adhesive layer 2 includes wax, and a coating method of the weak adhesive layer is dot coating or full coating, and a coating amount is 1g/m² to 40g/m², preferably 1g/m² to 9g/m². A coating amount of the weak adhesive layer may be adjusted according to a diameter of a closure linear. For example, a closure liner with a diameter of less than 40mm may be matched with a larger coating amount (e.g., 1g/m² to 40g/m²), a closure liner with a diameter of 40mm to 60mm may be matched with a relatively small coating amount (e.g., 1g/m² to 9g/m²), and a closure liner with a diameter greater than 60mm may be matched with a smaller coating amount (e.g., 1g/m² to 5g/m²), so as to reduce the energy absorbed by the wax of the weak adhesive layer 2.

### <<Release layer>>

As shown in FIG. 1, the release layer 9 is located below the weak adhesive layer 2 and above the electromagnetic induction heating layer 31. Also, the release layer 9 is a fully-coated or dot-coated silicone oil or gloss oil, and a thickness of which is 0.5µm to 20µm. By further including the release layer 9, the convenience of tearing by the user can be improved.

### <<Sealing laminated layer>>

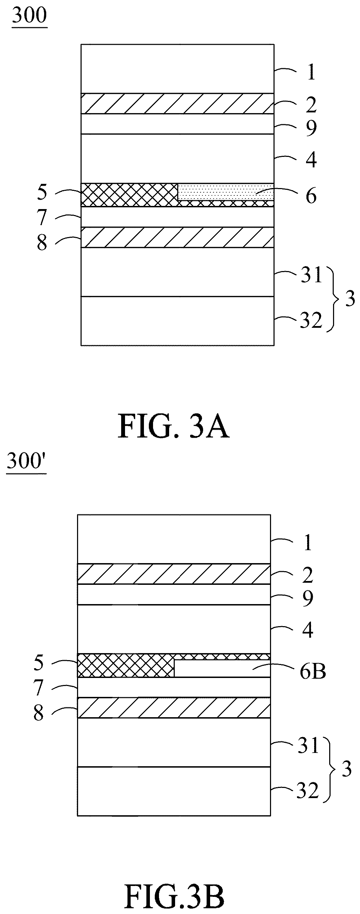

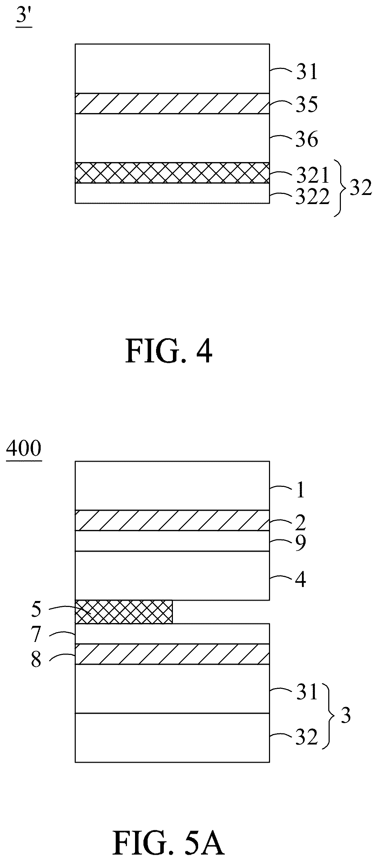

The sealing laminated layer 3 includes an electromagnetic induction heating layer 31 and a sealing layer 32. In the embodiment of FIG. 1 to FIG. 2, the electromagnetic induction heating layer 31 may be, for example, an aluminum foil film of 6µm to 40µm, and the contents in the container can be less susceptible to the influence of moisture and oxygen, and an upper surface of the aluminum foil layer may be a printing layer of 1µm to 20µm (not shown). Also, in the embodiments of FIG. 3A and FIG. 5A to FIG. 5C, the electromagnetic induction heating layer 31 may be, for example, an aluminum foil film of 10µm to 40µm.

In addition, the disclosure may use the wireless information integrated flake described later to serve the electromagnetic induction heating layer, which can effectively reduce the usage amount of aluminum foil and reduce energy consumption. Specifically, by the wireless information integrated flake of the present disclosure, the function of wireless information transmission can be increased, and the waste of material of aluminum foil can be reduced, energy consumption can be reduced, the waste of manpower can be avoided, the interference of metal and liquid is avoided, the production efficiency is improved, the communication performance is good and the communication distance is greatly enhanced, and the automation, digitization and intelligent development of factory, warehouse, logistics, store, unmanned cashier management have been greatly enhanced.

Also, the sealing layer 32 is mainly used for sealing the container opening, which may be hot melt glue, and a thickness of which is 4µm to 100µm. Specifically, as shown in FIG. 1, the sealing layer 32 may be a single-layer hot melt glue, which may be at least one selected from the group consisting of polyethylene (PE), polypropylene (PP), ethylene vinyl acetate copolymer (EVA), polyisobutylene (PIB), ethylene-ethyl acrylate (EEA), ethylene acrylic acid copolymer (EAA), ethylene methacrylic acid copolymer (EMAA), ethylene methyl methacrylate copolymer (EMMA), polyacrylate, polyacetate, ethylene butyl acrylate (EBA) and ethylene methyl acrylate copolymer (EMAC). Through this hot melt glue, there is no need to use adhesives. In addition, through certain combinations of hot melt glues, there is no need to use adhesives, and the effect of continuous sealing can be achieved even when the contents of the glass container contain water, and the effect of continuous sealing can also be achieved when the contents of the glass container contain spicy additives, honey, garlic and chili.

In addition, a barrier layer (not shown) may be included in the this embodiment. The barrier layer is located above the weak adhesive layer, and the material of the barrier layer is at least one selected from the group consisting of PET, polyamide (PA), polyvinylidene chloride (PVDC) and ethylene vinyl alcohol copolymer (EVOH), and a thickness of the barrier layer is 12µm to 100µm. By the barrier layer, moisture and oxygen can be further blocked.

In addition, although it is not shown in the figures, the layers of the two-piece type closure liner of the present embodiment may be laminated by various ways (such as bonding, joining or connecting, etc.).

### [Second embodiment]

Next, referring to FIG. 2, FIG. 2 is a schematic sectional diagram of the two-piece type closure liner 200 of another embodiment of the present disclosure. As shown in FIG. 2, the two-piece type closure liner 200 of another embodiment of the present disclosure includes: a backing layer 1, a weak adhesive layer 2, a sealing laminated layer 3, and a release layer 9. In the present embodiment, the backing layer 1, the weak adhesive layer 2 and the release layer 9 are the same as those described in the first embodiment, so their descriptions are omitted. The sealing laminated layer 3 of the second embodiment is described in detail below.

### <<Sealing laminated layer>>

Also, the sealing laminated layer 3 of the present embodiment sequentially from top to bottom includes: an electromagnetic induction heating layer 31 and a sealing layer 32. Also, in the this embodiment, the sealing layer 32 is a combination of a sealing film 322 and an adhesive 321, a thickness of the sealing film 322 is 12µm to 100µm, and the adhesive 321 is located between the electromagnetic induction heating layer 31 and the sealing film 322.

**In** addition, the sealing layer 32 (a single-layer hot melt glue) of the first embodiment may also be used in the second embodiment, and the sealing layer 32 (a combination of the sealing film 322 and the adhesive 321) of the second embodiment may also be used in the first embodiment.

### [Third embodiment]

Next, referring to FIG. 3A, FIG. 3A is a schematic sectional diagram of the two-piece type closure liner 300 of further embodiment of the present disclosure. As shown in FIG. 3A, the two-piece type closure liner 300 of further embodiment of the present disclosure from top to bottom includes: a backing layer **1,** a weak adhesive layer 2, an optional release layer 9, a surface film 4, an optional release area 6, a super strong adhesive 5, a bonding film 7, an optional first adhesive layer 8 and a sealing laminated layer 3 (may be the above-mentioned electromagnetic induction heating layer 31 and the above-mentioned sealing layer 32). In the present embodiment, the backing layer 1, the weak adhesive layer 2, the release layer 9 and the sealing laminated layer 3 may be the same as those described in the first embodiment or the second embodiment, so their descriptions are omitted. The other layers of the third embodiment are described in detail below.

### <<Surface film>>

An upper surface or a lower surface of the surface film 4 may be used as a printing surface to print different patterns. In an embodiment, a composition of the surface film 4 includes at least one of the groups consisting of PP, PET, PE, PA, PEN and PI. Also, a thickness of the surface film 4 is preferably 12µm to 150µm, and in the range, the tensile strength is large relatively, and the surface is flat and the brightness is good.

### <<Super strong adhesive>>

The super strong adhesive 5 is used to laminate the surface film 4 and a part of the bonding film 7, so that the peeling strength between the two films is greater than 17.8N/15mm, so as to provide a strong binding force; thus, when the user uncovers the two-piece type closure liner, the layers below the bonding film 7 (e.g., the sealing laminated layer 3) can be uncovered together. In an embodiment, the material of the super strong adhesive is dry compound adhesive, and a thickness of the super strong adhesive is 1µm to 7µm. Also, the material of the super strong adhesive may also be hot melt lamination glue, and the material of the hot melt lamination glue may be at least one selected from the group consisting of PE, PP, ethylene methyl acrylate copolymer (EMAC), ethylene methacrylic acid copolymer (EMAA), Ethylene-ethyl acrylate (EEA) and ethylene methyl methacrylate (EMMA), and a thickness of the hot melt lamination glue is 4µm to 50µm.

### <<Release area>>

In FIG. 3A, the release area 6 is located below the surface film 4, and the release area 6 is connected with the surface film 4 and part of the super strong adhesive 5, but is not directly connected with the bonding film 7. In contrast, the release area 6 may also be above the bonding film 7 (not shown), and the release area 6 may be connected with the bonding film 7 and part of the super strong adhesive 5, but is not directly connected with the surface film 4. Also, a composition of the release area 6 includes gloss oil or silicone oil, and a thickness of which is 0.5µm to 20µm. Also, when the user pinches and pulls the release area 6 upward, because the surface film 4 and the bonding film 7 are still in a composite state through the super strong adhesive 5, the two-piece type closure liner can be uncovered in a mode of pinching and pulling apart of pulling flap type.

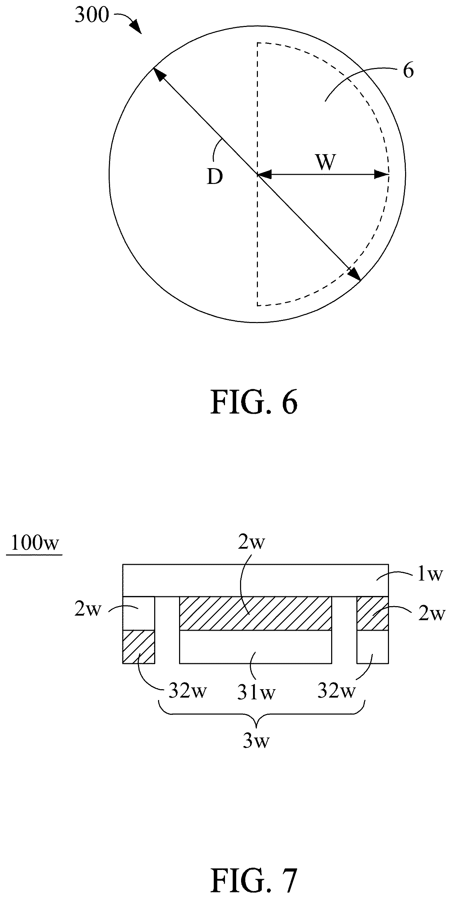

In addition, referring to FIG. 6, FIG. 6 is a schematic top view of the two-piece type closure liner 300 of further embodiment of the present disclosure. In addition, in an embodiment, as shown in FIG. 6, when the two-piece type closure liner 300 is approximately circular in a top-down viewing angle, a coating width W of the release area 6 is between 1/6 and 5/6 times a diameter D of the two-piece type closure liner 300, i.e., 1/6D ≦ W ≦ 5/6D. Thus, according to the diameters of different closure liners, it is possible to conveniently design a two-piece type closure liner while improving the convenience for users to tear off the closure liner.

### <<Bonding film>>

The bonding film 7 is mainly used to laminate with the electromagnetic induction heating layer 31, and a part of the bonding film 7 is laminated with the surface film 4 through a super strong adhesive 5. In an embodiment, a composition of the bonding film 7 includes at least one of the groups consisting of PET, PP, PE, PA, EPP and EPE, and a thickness of which is 12µm to 200µm; thus, the peeling strength of it after compounding with the electromagnetic induction heating layer 31 can be improved. In addition, in an embodiment, the bonding film 7 and the electromagnetic induction heating layer 31 may be laminated through the first adhesive layer 8, and the first adhesive layer 8 may be a conventional adhesive, such as dry compound adhesive, etc., and there is no specific limitation.

### [Example of changes in third embodiment]

Next, referring to FIG. 3B, FIG. 3B is a schematic sectional diagram of the two-piece type closure liner 300' of still embodiment of the present disclosure. As shown in FIG. 3B, the two-piece type closure liner 300' of still embodiment of the present disclosure from top to bottom includes: a backing layer 1, a weak adhesive layer 2, an optional release layer 9, a surface film 4, a super strong adhesive 5, an optional half moon tab layer 6B, a bonding film 7, an optional first adhesive layer 8 and a sealing laminated layer 3 (may be the above-mentioned electromagnetic induction heating layer 31 and the above-mentioned sealing layer 32). In the present embodiment, except for the half moon tab layer 6B, all other layers may be the same as those described in the third embodiment, so their descriptions are omitted. Also, the half moon tab layer 6B is laminated below the surface film 4 through the super strong adhesive 5 and has a composition which includes at least one of the groups consisting of paper, PET, PP, PA, PEN and PI. A width of the half moon tab layer 6B is between 1/6 and 5/6 times a diameter of the two-piece type closure liner 300'. Thus, when the user pinches and pulls the half moon tab layer 6B upward, because the surface film 4 and the bonding film 7 are still in a composite state through the super strong adhesive 5, the two-piece type closure liner 300' can be uncovered in a mode of pinching and pulling apart of pulling flap type.

### [Wireless information integrated sheet]

Next, the wireless information integrated flake that can be used as the electromagnetic induction heating layer of the present disclosure is described.

First, referring to FIG. 7, FIG. 7 is a schematic sectional diagram for illustrating the wireless information integrated flake 100w of a first embodiment of the present disclosure. As shown in FIG. 7, the wireless information integrated flake 100w may include a base film 1w, a first adhesive layer 2w and an information and heating layer 3w. Among them, the first adhesive layer 2w is located between the base film 1w and the information and heating layer 3w, for joining the base film 1w and the information and heating layer 3w. Each layer is described in detail below.

The base film 1w is used to manufacture an initial layer of the wireless information integrated flake. In an embodiment, the material of the base film 1w may be at least one selected from the group consisting of PI, PEN, PET, polycarbonate (PC), PP and PE. Also, a thickness of the base film 1w is preferably 20µm to 150µm, and in the range, the longitudinal tensile strength is large relatively. In addition, as shown in FIG. 7, a lower surface of the base film 1w is joined with the first adhesive layer 2w, and an upper surface of the base film 1w may be used as a printing surface to print different patterns.

The first adhesive layer 2w is a layer used to join the base film 1w and the information and heating layer 3w. In some embodiments, as long as the first adhesive layer 2w can be joined with the base film 1w and the information and heating layer 3w, the material of which may be such as dry compound adhesive. Also, a thickness of the first adhesive layer 2w may be such as 0.5µm to 7µm, which can make the peeling strength between the two layers of material joined to be greater than 4N/15mm.

Taking FIG. 7 as an example, the information and heating layer 3w includes an information area 31w and an electromagnetic induction heating ring 32w. The information area 31w has a function of wireless information reading and writing transmission, so as to facilitate the traceability and tracking of subsequent products. Among them, the information area 31w has an antenna 312w and a chip 311w to be mutually conducted. Also, the electromagnetic induction heating ring 32w can use electromagnetic induction to generate heat through the electromagnetic field generated by the electromagnetic induction sealing machine, so that the sealing layer of the closure liner is melted by heat and adheres to the container opening of the container, and then can be used as an electromagnetic induction closure liner to seal the container opening. By including the wireless information integrated flake of the present disclosure, most of the heat can be generated in the electromagnetic induction heating ring 32w, and there is only very little heat conducted in at least one physical connection bridge 33w between the antenna 312w and the electromagnetic induction heating ring 32w. Among them, a length of the physical connection bridge 33w may be 0.1mm to 3mm, a width of the physical connection bridge 33w may be 0.01mm to 5mm, and the material of the physical connection bridge 33w may be the same as that of the antenna 312w. Thus, a large amount of heat can be blocked from being transferred to the center area of the closure liner during electromagnetic induction sealing, and energy waste can be saved. Also, when applied to closure liners containing batteries, a thickness of the information and heating layer 3w may be 6µm to 2.5mm; when applied to closure liners without batteries, the thickness of the information and heating layer 3w may be 6µm to 300µm.

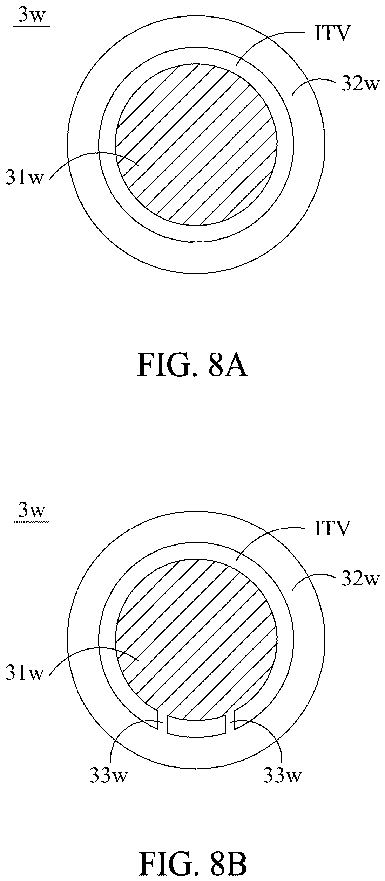

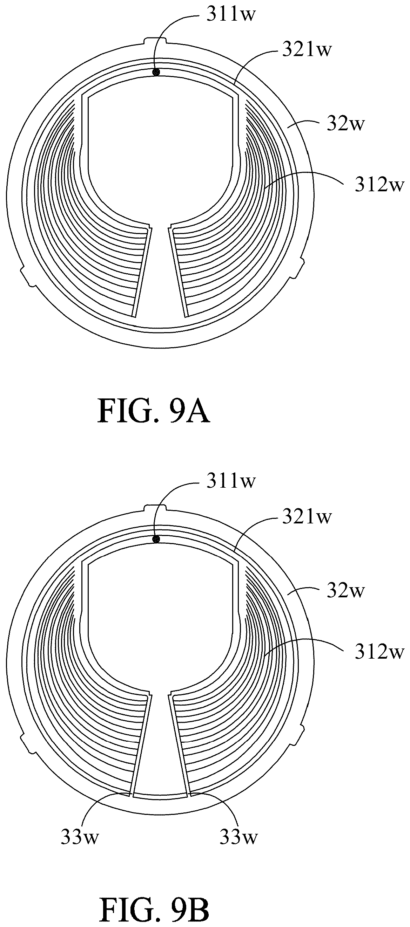

Next, FIG. 8A is a schematic plan diagram for illustrating the information and heating layer 3w of an embodiment of the present disclosure, and FIG. 8B is a schematic plan diagram for illustrating the information and heating layer 3w of another embodiment of the present disclosure. As shown in FIG. 8A or 8B, the electromagnetic induction heating ring 32w surrounds the information area 31w in a plan viewing angle; also, as shown in FIG. 8A, there is full of a spacing ITV between the electromagnetic induction heating ring 32w and the information area 31w, that is, there is no element for physical connection (such as the physical connection bridge described later) between the electromagnetic induction heating ring 32w and the information area 31w. Therefore, by filling the spacing ITV between the electromagnetic induction heating ring 32w and the information area 31w, the filled spacing ITV can block the heat conduction to the information area 31w when the electromagnetic induction heating occurs, so it is a preferable aspect. Also, the spacing ITV (the space between the outermost edge of the information area and the innermost edge of the electromagnetic induction heating ring) may be 0.1mm to 3mm. Next, as shown in FIG. 8B, most of the positions between the electromagnetic induction heating ring 32w and the information area 31w have a spacing ITV, the spacing ITV can block most of the heat conduction to the information area 31w when the electromagnetic induction heating occurs, and the spacing ITV (the space between the outermost edge of the information area and the innermost edge of the electromagnetic induction heating ring) may be 0.1mm to 3mm. In addition, there can be at least one physical connection bridge 33w (indicated as two physical connection bridges in FIG. 8B and FIG. 9B) between the antenna 312w and the electromagnetic induction heating ring 32w, a length of the physical connection bridges 33w may be 0.1mm to 3mm, and a width of the physical connection bridge 33w may be 0.01mm to 5mm. At this time, although the electromagnetic induction heating ring 32w of the closed-loop structure is electrically connected with the information area 31w, it will not reduce a distance of wireless communication too much. That is to say, the electromagnetic induction heating ring 32w and the information area 31w can be filled with an spacing ITV, and can have both the spacing ITV and the physical connection bridge 33w, or there can be no spacing (for example, the electromagnetic induction heating ring 32w and the information area 31w therebetween are filled with a physical connection bridge 33w).

In some embodiment, the material of the electromagnetic induction heating ring 32w may be metal, such as aluminum, copper, gold, silver, or tin, but is not limited thereto. Also, from the point of view of the effect of generating heat and cost when subjected to a changing electromagnetic field, the electromagnetic induction heating ring 32w is preferably aluminum foil, and a thickness of which is 6µm to 40µm.

Then, FIG. 9A is a schematic plan diagram for illustrating the information area 31w of an embodiment of the disclosure, and FIG. 9B is a schematic plan diagram for illustrating the information area 31w of another embodiment of the disclosure. Among them, FIG. 9A corresponds to the embodiment in which the electromagnetic induction heating ring 32w and the information area 31w therebetween are filled with the spacing ITV in FIG. 8A above, and FIG. 9B corresponds to the embodiment in which most of the positions between the electromagnetic induction heating ring 32w and the information area 31w have the spacing ITV in FIG. 8B above. In addition, as shown in FIG. 9A or 9B, the information area 31w includes a chip 311w and an antenna 312w. Also, under the condition that the wireless information transmission function can be realized, the chip 311w and the antenna 312w can be arranged in FIG. 9A or 9B or other ways based on the RFID frequency band that the user wants to use, and there is no specific limitation.

On the other hand, as for the chip 311w, it may have a unique identification code and can be selected according to the purpose. For example, it can be a radio frequency identification near field communication (RFID _NFC) chip, a radio frequency identification high frequency (RFID_HF) chip, a radio frequency identification ultra-high frequency (RFID _UHF) chip or a radio frequency identification microwave (RFID _MW) chip, and there is no specific limitation. These chips can be matched with the antenna 312w described later to realize wireless information communication functions.

Next, as for the antenna 312w, it is mainly used to generate signals that can be transmitted wirelessly, and the material may be metal, such as copper, silver, gold, tin or aluminum, and there is no specific limitation.

**In** addition, although FIG. 7 shows a situation where the base film 1w is on top and the information and heating layer 3w is at the bottom, the order of the base film 1w and the information and heating layer 3w can be reversed according to the requirements, that is, it is adjusted the base film 1w at the bottom and the information and the heating layer 3w on top.

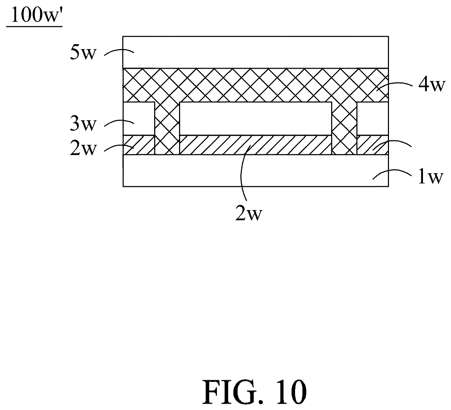

**In** addition, the wireless information integrated flake can further be a wireless information integrated flake 100w', which can be as shown in FIG. 10, in addition to the aforesaid base film 1w, the first adhesive layer 2w and the information and heating layer 3w, it further includes a protective layer 5w and a second adhesive layer 4w. Among them, the protective layer 5w is located on one side of the information and heating layer 3w away from the base film 1w. Also, the second adhesive layer 4w is located between the information and heating layer 3w and the protective layer 5w, and it is a layer used for joining the information and the heating layer 3w and the protective layer 5w.

In some embodiment, as long as the second adhesive layer 4w can be joined with the information and heating layer 3w and the protective layer 5w, the material of which may be, for example, dry compound adhesive, and there is no specific limitation. Also, a thickness of the second adhesive layer 4w may be 0.5µm to 7µm, which is preferably such that the peeling strength between the two layers of materials being joined is greater than 4N/15mm. In addition, as shown in FIG. 10, the second adhesive layer 4w can be extended to fill the spacing between the electromagnetic induction heating ring 32w and the information area 31w, so as to improve the overall structural strength of the wireless information integrated flake 100w'.

Next, the protective layer 5w is explained. The protective layer 5w is used to protect the information area 31w (i.e., the chip 311w, the antenna 312w and the battery that can be added additionally) from external force damaging the chip 311w and battery and affect the wireless information transmission ability, the material of the protective layer 5w may be at least one selected from the group consisting of polyethylene terephthalate (PET), polypropylene (PP), polyethylene (PE), polyamide (PA), polyvinylidene chloride (PVDC), ethylene-vinyl alcohol copolymer (EVOH), polyethylene naphthalate (PEN) and polyimide (PI). Also, in some preferable embodiments, a thickness of the protective layer 5w may be, for example, 12µm to 100µm.

In addition, the upper surface or lower surface of the protective layer 5w may be used as a printing surface. Therefore, although FIG. 10 shows the situation where the base film 1w is on the bottom and the protective layer 5w is on top (the upper surface of the protective layer 5w serves as the printing surface), the order of the base film 1w and the protective layer 5w can be reversed according to the requirements, that is, it can be changed to a situation where the base film 1w is on top and the protective layer 5w is on the bottom (the lower surface of the protective layer 5w serves as the printing surface).

### [Modification examples]

Then, the modification example of the present disclosure is illustrated, and the modification examples are mainly for the improvement of the sealing laminated layer. Specifically, referring to FIG. 4, FIG. 4 is a schematic sectional diagram of the sealing laminated layer 3' of a modification example of the present disclosure.

First, as shown in FIG. 4, the sealing laminated layer 3' from top to bottom includes: an electromagnetic induction heating layer 31, an optional second adhesive layer 35, a joining layer 36, the adhesive 321 and the sealing film 322, wherein the electromagnetic induction heating layer 31, the adhesive 321 and the sealing film 322 are the same as the foregoing embodiment, and are not repeated herein.

Herein, the joining layer 36 is located between the electromagnetic induction heating layer 31 and the sealing layer 32, and the material of which includes at least one of the groups consisting of PET, PE, PP and PA, and a thickness of which is 12µm to 50µm. By the joining layer 36, the tensile strength of the sealing laminated layer 3' can be further improved.

Similarly, in an embodiment, the joining layer 36 and the electromagnetic induction heating layer 31 can be laminated through the second adhesive layer 35, and the second adhesive layer 35 may be a conventional adhesive, such as dry compound adhesive, etc., and there is no specific limitation.

In addition, although it is not shown in the figures, the layers of the present modification example may be also laminated by various ways (such as bonding, joining or connecting, etc.).

### [Fourth embodiment]

Next, referring to FIG. 5A, FIG. 5A is a schematic sectional diagram of the two-piece type closure liner 400 of still further embodiment of the present disclosure. As shown in FIG. 5A, the two-piece type closure liner 400 of still further embodiment of the present disclosure from top to bottom includes: a backing layer 1, a weak adhesive layer 2, a release layer 9, a surface film 4, a super strong adhesive 5, a bonding film 7, an optional first adhesive layer 8 and a sealing laminated layer 3 (may be the electromagnetic induction heating layer 31 and the sealing layer 32 described above). **In** the present embodiment, the above layers may be the same as those described in the first embodiment to the third embodiment, so their descriptions are omitted.

The main difference between the fourth embodiment and the third embodiment is that the release area is omitted, and the coating width of the super strong adhesive 5 is between 1/6 and 5/6 times the diameter of the two-piece type closure liner. Thus, it can also easily design the two-piece type closure liner while tearing off the closure liner in the mode of pulling flap type without coating the release area.

### [Fifth embodiment]

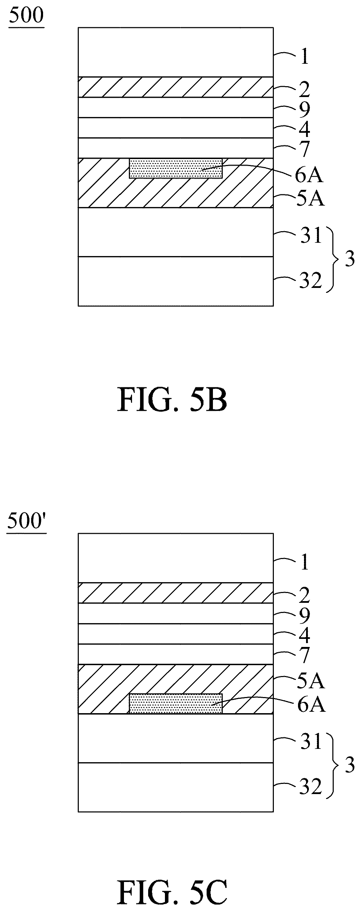

Next, referring to FIGS. 5B and 5C, FIGS. 5B and 5C are schematic sectional diagrams of the two-piece type closure liners 500, 500' of still more embodiment of the present disclosure. As shown in FIGS. 5B and 5C, the two-piece type closure liners 500, 500' of still more embodiment of the present disclosure from top to bottom include: a backing layer 1, a weak adhesive layer 2, a release layer 9, a surface film 4, a bonding film 7, a strong adhesion layer 5A and a release block 6A, an electromagnetic induction heating layer 31 and a sealing layer 32. Also, in FIG. 5B, the release block 6A is located between the bonding film 7 and the strong adhesion layer 5A, while in FIG. 5C, it is located between the strong adhesion layer 5A and the electromagnetic induction heating layer 31. In the present embodiment, except for the strong adhesion layer 5A and the release block 6A, the above-mentioned layers may be the same as those described in the first embodiment to the fourth embodiment, so their descriptions are omitted.

### [Strong adhesion layer and release block]

As shown in FIGS. 5B to 5C, the strong adhesion layer 5A is located between the bonding film 7 and the electromagnetic induction heating layer 31, and it can be used to laminate the bonding film 7 and the electromagnetic induction heating layer 31, so that the peeling strength between the bonding film 7 and the electromagnetic induction heating layer 31 after compounding is greater than 12N/15mm. Also, because there is a release block 6A between the bonding film 7 and the electromagnetic induction heating layer 31, and the release block 6A belongs to a material that is easy to peel off, the strong adhesion layer 5A can be further used to closely compound the bonding film 7, the release block 6A and the electromagnetic induction heating layer 31 with each other, and the peeling strength after compounding is greater than 12N/15mm. In some embodiments, the strong adhesion layer 5A may be, for example, dry compound adhesive, and a thickness of the dry compound adhesive is preferably 0.5µm to 6µm, but is not limited thereto. In another embodiments, the strong adhesion layer 5A may also be, for example, hot melt lamination glue, and the material of the hot melt lamination glue may be at least one selected from the group consisting of PE, PP, EMAA, EAA, EEA, EMAC and EMMA, and a thickness of the hot melt lamination glue is preferably 4µm to 50µm, but is not limited thereto. Thus, through the configuration of the strong adhesion layer 5A, the user will be able to more easily bring each layer of the two-piece type closure liners 500 and 500' to be pulled upwards and peeled off together when the user pinches the lifting part described later by hand and pulls upwards and peels off.

The main difference between the fifth embodiment and the above fourth embodiment is that, through a combination of the surface film 4, the strong adhesion layer 5A and the bonding film 7, the bonding film 7 and the electromagnetic induction heating layer 31 are partially connected by the strong adhesion layer 5A, and the other parts are connected by the release block 6A, so as to produce the effect of easy-uncovering.

In addition, in some embodiments, the release block (not shown) may also be located on the lower surface of the electromagnetic induction heating layer 31, that is, located between the electromagnetic induction heating layer 31 and the sealing layer 32. Also, the material of the release block 6A may be at least one selected from the group consisting of wax, gloss oil and silicone oil, and a thickness of which may be 0.5µm to 40µm, and it is located on the lower surface of the bonding film 7 or on the upper surface or lower surface of the electromagnetic induction heating layer 31. Because the release block 6A has an easy-to-peel material, the lifting part 610 described later can be not easily adhered to the electromagnetic induction heating layer 31 below, so that the user can more easily pull up the lifting part, and each layer of the two-piece type closure liners 500, 500' can be more easily pulled up along with the lifting part 610, thereby improving the convenience of the user to uncover it.

### [Cutting of upper surface of the surface film of two-piece type closure liner]

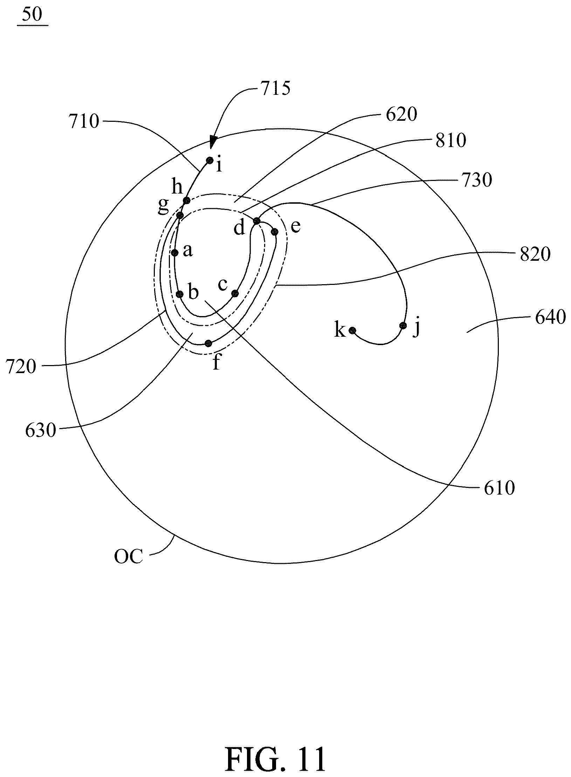

Next, referring to FIG. 11, FIG. 11 is a schematic top view for illustrating the two-piece type closure liner 50 of the present disclosure. In some embodiments, the shape of the two-piece type closure liner 50 in the disclosure may be various geometric shapes such as a circle, a square, a rectangle, a rhombus, a triangle, a polygon, a cone, a trapezoid, etc. Taking FIG. 11 as an example, FIG. 11 discloses a circular two-piece type closure liner 50.

As shown in FIG. 11, an upper surface of the surface film 4 of the two-piece type closure liner 50 may include a lifting part 610, a lifting neck 620, a hollow-out area 630 and a peripheral area 640. In FIG. 11, the lifting part 610, the lifting neck 620 and the hollow-out area 630 are all located in the same half (upper half) of the two-piece type closure liner 50, so that the manufacturer can use the area of the other half for other design considerations, in order to meet the design needs of the manufacturer, thereby improving the design flexibility of the manufacturer and/or the aesthetics of the closure liner. Specifically, the lifting part 610 is equivalent to an area surrounded by points a-b-c-d-a, the lifting neck 620 is equivalent to an area between points h-e, the hollow-out area 630 is equivalent to an area surrounded by points a-b-c-d-e-f-g-a, and the peripheral area 640 is equivalent to an area surrounding the lifting part 610, the lifting neck 620 and the hollow-out area 630. Also, a tearing line 710 is equivalent to a line connected by points a-g-h-i, and a hollow-out cutting line 720 is equivalent to a line connected by points a-b-c-d-e-f-g-a. Furthermore, the tearing line 710 is provided with at least one tearing and cutting breakpoint, the surface film corresponding to the at least one tearing and cutting breakpoint is not completely cut off in the vertical direction, and the surface film corresponding to the tearing line except for the at least one tearing and cutting breakpoint is completely cut off; the hollow-out cutting line 720 is not provided with a hollow-out cutting breakpoint.

Also, one end (i.e., point a) of the tearing line 710 is connected with the lifting part 610, and the other end (i.e., point i) of the tearing line 710 is separated from an outermost circle OC of the two-piece type closure liner 50 by a tearing spacing 715. In some embodiments, the tearing spacing 715 is greater than or equal to 0mm, and the tearing spacing 715 is less than or equal to 20mm. In the context of the present disclosure, "tearing spacing" refers to "the shortest distance from one end of the tearing line (i.e., relative to the other end connected with the lifting part) to the outermost circle of the two-piece type closure liner". In a preferable embodiment, the tearing spacing 715 is greater than or equal to 0mm, and the tearing spacing 715 is less than or equal to 10mm. Thus, through the configuration of the tearing spacing 715 which is greater than 0mm, after the user pinches the lifting part 610 and pulls up the lifting part 610 along the tearing line 710, and after the end (i.e., point i) of the tearing line 710 is torn up, the two-piece type closure liner 50 will provide a cushioning effect due to the termination of the tearing line 710, thus preventing from the strong uncovering force of the user and causing only part of the two-piece type closure liner 50 (for example, the lifting part 610 and the area above it) to be uncovered, and then the user is reminded to appropriately change the strength of uncovering force and the direction of exerting force, so as to improve the integrity of uncovering the closure liner.

In addition, as shown in FIG. 11, the upper surface of the surface film 4 of the two-piece type closure liner 50 is further provided with a tearing and twisting cutting line 730. The tearing and twisting cutting line 730 is equivalent to a line connected by points d-j-k. Also, the tearing line 710 is connected to one end (i.e., point a) of the lifting part 610, and the tearing and twisting cutting line 730 is connected to the other end of the lifting part 610 (i.e., point d), so that the tearing line 710 and the tearing and twisting cutting line 730 are respectively disposed on the left and right sides of the hollow-out area 630. Thus, through the configuration of the tearing and twisting cutting line 730, when the user pinches the lifting part 610 and pulls up the lifting part 610 along the tearing line 710, and then tears off the end (i.e., point i) of the tearing line 710, it can not only provide a cushioning effect due to the termination of the tearing line 710, but also guide the user to further uncover the two-piece type closure liner 50 along the tearing and twisting cutting line 730, and then the user is reminded to appropriately change the strength of uncovering force and the direction of exerting force, so as to improve the integrity of uncovering the closure liner.

In addition, if the release block 6A is coated on the lower surface of the bonding film, the coating area of the release block 6A is not less than an area corresponding to the lifting part 610, taking FIG. 11 as an example, the coating area of the release block 6A is not less than a first coating range 810 (not less than the lifting part, that is, equivalent to an area surrounded by the dashed line in FIG. 11); if the release block 6A is coated on the upper surface of the electromagnetic induction heating layer, the coating area of the release block 6A is not less than the lifting part 610 and the hollow-out area 630, taking FIG. 11 as an example, the coating area of the release block 6A is not greater than a second coating range 820 (not less than the lifting part 610 and the hollow-out area, that is, equivalent to an area surrounded by the dashed line in FIG. 11).

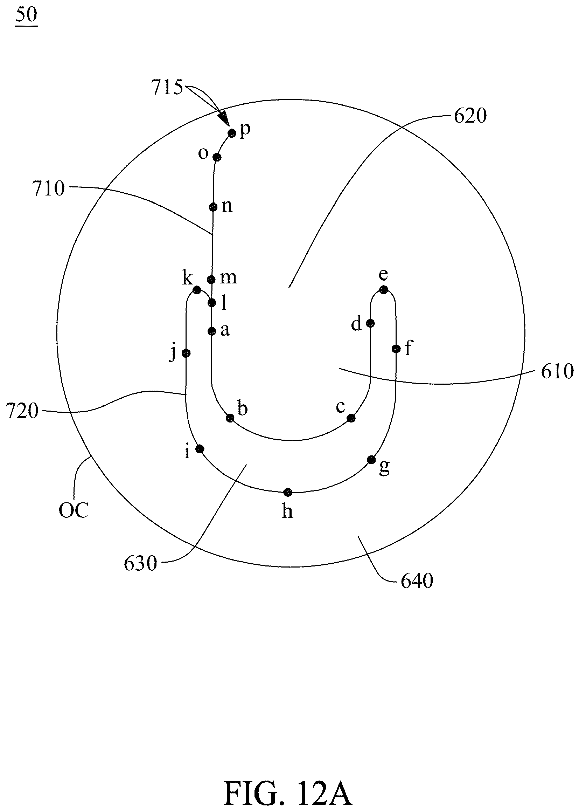

Furthermore, in order to clarify the embodiments covered by the two-piece type closure liner of the present disclosure, other particular examples would be presented to further describe other variational forms on the upper surface of the surface film of the two-piece type closure liner. With reference to FIG. 12A to FIG. 12C, FIG. 12A to FIG. 12C are schematic top view for illustrating the two-piece type closure liner of other embodiment of the present disclosure. It should be noted that the following is described for the variational parts for such as the lifting part, the lifting neck, the hollow-out area, the tearing line, and the tearing spacing; since the rest content may be substantially the same as those of the two-piece type closure liner shown in FIG. 11, the descriptions thereof are omitted here.

As shown in FIG. 12A, the upper surface of the surface film 4 of the two-piece type closure liner 50 may include a lifting part 610, a lifting neck 620, a hollow-out area 630 and a peripheral area 640. Specifically, taking FIG. 12A as an example, the lifting part 610 is an area enclosed by points a-b-c-d-a, the lifting neck 620 is an area between points k-e, the hollow-out area 630 is an area enclosed by points a-b-c-d-e-f-g-h-i-j-k-l-a, and the peripheral area 640 is an area enclosing the lifting part 610, the lifting neck 620, and the hollow-out area 630. Also, a tearing line 710 is arranged on the functional layer of the two-piece type closure liner 50; taking FIG. 12A as an example, the tearing line 710 is a line formed by connecting points a-l-m-n-o-p. In this configuration, one end (i.e., point a) of the tearing line 710 is connected to the lifting part 610, and the other end (i.e., point p) of the tearing line 710 and the outermost circle OC of the two-piece type closure liner 50 are spaced by a tearing spacing 715.

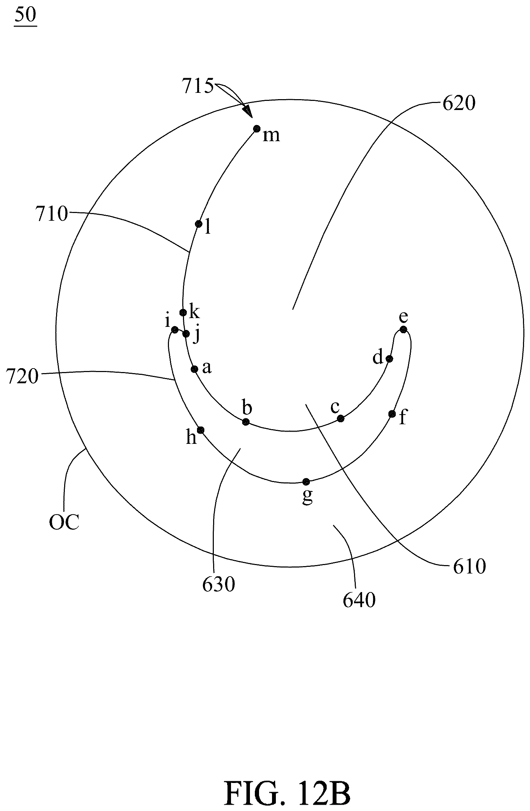

As shown in FIG. 12B, the upper surface of the surface film 4 of the two-piece type closure liner 50 may include a lifting part 610, a lifting neck 620, a hollow-out area 630 and a peripheral area 640. Specifically, taking FIG. 12B as an example, the lifting part 610 is an area enclosed by points a-b-c-d-a, the lifting neck 620 is an area between points i-e, the hollow-out area 630 is an area enclosed by points a-b-c-d-e-f-g-h-i-j-a, and the peripheral area 640 is an area enclosing the lifting part 610, the lifting neck 620, and the hollow-out area 630. Also, a tearing line 710 is arranged on the functional layer of the two-piece type closure liner 50; taking FIG. 12B as an example, the tearing line 710 is a line formed by connecting points a-j-k-l-m. In this configuration, one end (i.e., point a) of the tearing line 710 is connected to the lifting part 610, and the other end (i.e., point m) of the tearing line 710 and the outermost circle OC of the two-piece type closure liner 50 are spaced by a tearing spacing 715.

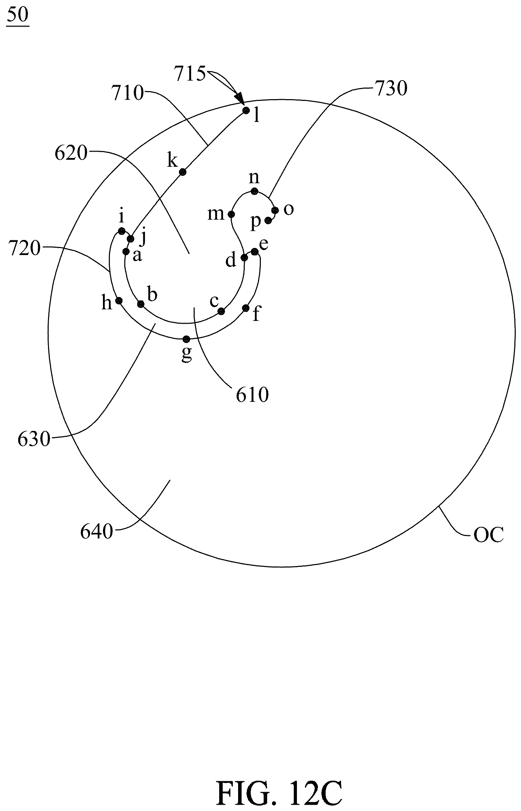

As shown in FIG. 12C, the upper surface of the surface film 4 of the two-piece type closure liner 50 may include a lifting part 610, a lifting neck 620, a hollow-out area 630 and a peripheral area 640. Specifically, taking FIG. 12C as an example, the lifting part 610 is an area enclosed by points a-b-c-d-a, the lifting neck 620 is an area between points i-e, the hollow-out area 630 is an area enclosed by points a-b-c-d-e-f-g-h-i-j-a, and the peripheral area 640 is an area enclosing the lifting part 610, the lifting neck 620, and the hollow-out area 630. Also, a tearing line 710 is arranged on the functional layer of the two-piece type closure liner 50; taking FIG. 12C as an example, the tearing line 710 is a line formed by connecting points a-j-k-l. In this configuration, one end (i.e., point a) of the tearing line 710 is connected to the lifting part 610, and the other end (i.e., point 1) of the tearing line 710 and the outermost circle OC of the two-piece type closure liner 50 are spaced by a tearing spacing 715. Further, the upper surface of the surface film 4 of the two-piece type closure liner 50 is also provided with the tearing and twisting cutting line 730; taking FIG. 12C as an example, the tearing and twisting cutting line 730 is a line formed by connecting points d-m-n-o-p.

### [Fabrication of two-piece type closure liner]

Based on the following steps, a two-piece type closure liner related to the first embodiment is fabricated.

First, the release layer is coated on the upper surface of the electromagnetic induction heating layer roll, and then the hot melt glue is coated on the lower surface of the electromagnetic induction heating layer roll to make a sealing laminated layer roll.

Next, a weak adhesive is coated the surface between the backing layer roll and the electromagnetic induction heating layer of the sealing laminated layer roll, and dry compounding or film laminating compounding is carried out to make a two-piece type closure liner roll. Then, according to the size required by the customer, the two-piece type closure liner roll is cropped into two-piece type closure liners. Among them, the peeling strength between the two layers of materials dryly laminated through the adhesive is greater than 4N/15mm; the peeling strength between the two layers of materials laminated through the weak adhesive, measured by a standard of ASTM D903, is 0.05N/15mm or more and 2.26N/15mm or less.

In addition, as long as the adhesive is coated on the lower surface of the electromagnetic induction heating layer roll and dryly laminated with the lamination surface of the sealing film roll, a sealing laminated layer roll is made in a curing chamber for 24 hours or more, and then a two-piece type closure liner related to the second embodiment can be made.

Herein, the temperature of the five sections of the drying tunnel above the dry compounding machine is 60°C to 65°C, 65°C to 70°C, 70°C to 75°C, 75°C to 80°C, and 80°C to 85°C. The temperature of the compounding roller of the dry compounding machine is 50°C to 60°C. The temperature of the curing chamber is 50°C to 55°C.

On the other hand, it can fabricate a two-piece type closure liner related to the third embodiment based on the following steps.

First, the adhesive is coated on the upper surface of the electromagnetic induction heating layer roll and dryly laminated with the lamination surface of the bonding film roll, a first composite layer roll is made in a curing chamber for 24 hours or more.

Next, the adhesive is coated on the lower surface of the first composite layer roll, and dryly laminated with the lamination surface of the sealing film roll, a lower composite layer roll is made in a curing chamber for 24 hours or more. Alternatively, hot melt glue is directly coated on the lower surface of the first composite layer roll to make the lower composite layer roll.

Furthermore, the release layer is coated on the upper surface of the surface film roll, and then the release area is coated on the lower surface of the surface film roll (the coating width is between 1/6 and 5/6 times the diameter of the two-piece type closure liner), and the upper surface of the bonding film of the lower composite layer roll is coated with super strong adhesive, and then the dry compounding is carried out, and a bottom layer roll is made in a curing chamber for 24 hours or more. In addition, when the diameter D of the two-piece type closure liner 300 is relatively large, the sectional width W of the coating range of the super strong adhesive 5 can be increased; and when the diameter D of the two-piece type closure liner 300 is relatively small, the sectional width W of the coating range of the super strong adhesive 5 can be reduced.

Next, a weak adhesive is coated between the lower surface of the cardboard roll and the upper surface of the surface film of the bottom layer roll, and dry compounding or film laminating compounding is carried out to make a two-piece type closure liner roll. Then, according to the size required by the customer, the two-piece type closure liner roll is cropped into two-piece type closure liners.

Among them, the peeling strength between the two layers of materials dryly laminated through the adhesive (such as the first adhesive layer to the second adhesive layer) is greater than 4N/15mm; the peeling strength between the two layers of materials laminated through the weak adhesive, measured by a standard of ASTM D903, is 0.05N/15mm or more and 2.26N/15mm or less; the peeling strength between the two layers of materials dryly laminated through the super strong adhesive is greater than 17.8N/15mm.

Also, based on the third embodiment, in the case that the release area is not coated and the coating width of the super strong adhesive is between 1/6 and 5/6 times the diameter of the two-piece type closure liner, a two-piece type closure liner related to the fourth embodiment can be made. In addition, the coating range of the super strong adhesive can also be increased or decreased as described above.

In addition, it can also make a modification example of the sealing laminated layer with reference to the above-mentioned dry compounding method or the conventional compounding method.

Herein, the temperature of the five sections of the drying tunnel above the dry compounding machine is 60°C to 65°C, 65°C to 70°C, 70°C to 75°C, 75°C to 80°C, and 80°C to 85°C. The temperature of the compounding roller of the dry compounding machine is 50°C to 60°C. The temperature of the curing chamber is 50°C to 55°C.

In addition, as far as the compounding method is concerned, the aforesaid dry compounding method or the conventional method of pasting and pressing can be used, there is no special limitation.

On the other hand, as far as the cutting method is concerned, the release block (not shown) may be coated on the lower surface of the bonding film roll, and then the upper surface of the two-piece type closure liner roll is cropped with a printed pattern (such as the pattern in FIG. 11) using a cutting mold to crop out the tearing line, the hollow-out cutting line, the hollow-out area, the tearing and twisting cutting line, etc. Among them, the coating area of the release block is not less than the lifting part, and a thickness of the hollow-out area is equal to a composite part of the electromagnetic induction heating layer and the sealing layer, and is less than an overall thickness of the two-piece type closure liner.

Among them, the material of the release block may be at least one selected from the group consisting of wax, gloss oil and silicone oil, and a thickness of which may be 0.5µm to 40µm.

### [Fabrication of wireless information integrated flake roll]

Based on the following steps, a wireless information integrated flake roll of a preferable embodiment of the present disclosure is fabricated, and the wireless information integrated flake roll described herein may be applied to the process of making the aforesaid two-piece type closure liner roll as an implementing aspect in the aforesaid electromagnetic induction heating layer roll.

First, the lamination surface of the base film roll is coated with composite adhesive (a first adhesive layer), and after compounding it with the lamination surface of the metal foil roll, a wireless information integrated flake blank roll is made. Second, the metal foil of the wireless information integrated flake blank roll is etched, the antenna and the chip are bonding into an electrical connection, and then the chip packaging protective adhesive is used by the dispensing machine to package the chip and the bonding wire connecting the chip and the antenna. At this time, the metal foil of the wireless information integrated flake blank roll forms the information and heating layer, and the wireless information integrated flake blank roll becomes the wireless information integrated flake roll.

Among them, the peeling strength between the two layers of materials laminated through the composite adhesive is greater than 4N/15mm.

In addition, if a battery is desired to be added to the information and heating layer, a fusion welding machine or conductive adhesive can be used to process a battery cell and the chip into an electrical connection.

On the other hand, on the basis of the aforesaid wireless information integrated flake roll, dry compound adhesive (a second adhesive layer) is coated on the lamination surface of the protective layer roll, and is dryly laminated with a surface (a surface away from the base film) of the information and heating layer of the wireless information integrated flake roll, and the wireless information integrated flake roll related to another embodiment can be made in the curing chamber for 24 hours or more.

It should be noted that the above description is only an embodiment, and the order in which the above layers are made is not specifically limited. Also, although the fabrication of the two-piece type closure liners of the first to fourth embodiments is mainly illustrated herein, the sealing laminated layer of the modification example can also be used as a substitute for the aforesaid sealing laminated layer in the above embodiments, and other compounding methods (bonding, joining, coating, film laminating, connecting, etc.) can be used as an alternative to the dry compounding.

## Claims

1. A two-piece type closure liner (50; 100; 200; 300; 300'; 400; 500; 500'), comprising:
a backing layer (1), being a cardboard or a foaming board film;
a sealing laminated layer (3; 3'), sequentially from top to bottom comprising an electromagnetic induction heating layer (31) and a sealing layer (32);
a weak adhesive layer (2), located between the backing layer (1) and the sealing laminated layer (3; 3'), so that a peeling strength between the backing layer (1) and the sealing laminated layer (3; 3') is 0.05N/15mm or more and 2.26N/15mm or less.

2. The two-piece type closure liner (50; 100; 200; 300; 300'; 400; 500; 500') according to claim 1, further comprising a release layer (9), located below the weak adhesive layer (2), the material of the release layer (9) comprises a fully-coated or dot-coated gloss oil or silicone oil.

3. The two-piece type closure liner (50; 100; 200; 300; 300'; 400; 500; 500') according to claim 1, further comprising a barrier layer, located above the weak adhesive layer (2), the material of the barrier layer is at least one selected from the group consisting of PET, polyamide (PA), polyvinylidene chloride (PVDC) and ethylene vinyl alcohol copolymer (EVOH).

4. The two-piece type closure liner (50; 100; 200; 300; 300'; 400; 500; 500') according to claim 1, wherein the material of the weak adhesive layer (2) comprises polyolefin; alternatively, the material of the weak adhesive layer (2) comprises polyurethane; or, the material of the weak adhesive layer (2) comprises wax, and a coating method of the weak adhesive layer (2) is dot coating or full coating.

5. The two-piece type closure liner (50; 100; 200; 300; 300'; 400; 500; 500') according to claim 1, wherein the sealing layer (32) is hot melt glue or a combination of a sealing film (322) and an adhesive (321), and the hot melt glue is at least one selected from the group consisting of polyethylene (PE), polypropylene (PP), ethylene vinyl acetate copolymer (EVA), polyisobutylene (PIB), ethylene-ethyl acrylate (EEA), ethylene acrylic acid copolymer (EAA), ethylene methacrylic acid copolymer (EMAA), ethylene methyl methacrylate copolymer (EMMA), ethylene methyl acrylate copolymer (EMAC), polyacrylate, polyacetate and ethylene butyl acrylate (EBA); the sealing film (322) is at least one selected from the group consisting of paper, polyethylene (PE), polypropylene (PP), polyamide (PA), polyvinylidene chloride (PVDC), ethylene vinyl alcohol copolymer (EVOH) and polyethylene terephthalate (PET); the adhesive (321) is located between the electromagnetic induction heating layer (31) and the sealing film (322).

6. The two-piece type closure liner (50; 100; 200; 300; 300'; 400; 500; 500') according to claim 1, wherein the weak adhesive layer (2) and the electromagnetic induction heating layer (31) therebetween further sequentially comprise:
a surface film (4), having a composition comprising at least one of the groups consisting of PP, PET, PE, polyamide (PA), PEN and polyimide (PI);
a super strong adhesive (5);
a bonding film (7), laminated with the surface film (4) through the super strong adhesive (5), and having a composition comprising at least one of the groups consisting of PET, PE, PP, PA, EPP and EPE; also
the super strong adhesive (5) makes the peeling strength between the surface film (4) and the bonding film (7) greater than 17.8N/15mm.

7. The two-piece type closure liner (50; 100; 200; 300; 300'; 400; 500; 500') according to claim 1, wherein one side of the backing layer (1) facing the electromagnetic induction heating layer (31) has a polyolefin film laminating layer, and the polyolefin is at least one of the groups consisting of polyethylene, polypropylene, polypentene and polyhexene.

8. The two-piece type closure liner (50; 100; 200; 300; 300'; 400; 500; 500') according to claim 1, wherein the electromagnetic induction heating layer (31) is aluminum foil or a wireless information integrated flake (100w; 100w').

9. The two-piece type closure liner (50; 100; 200; 300; 300'; 400; 500; 500') according to claim 8, wherein the wireless information integrated flake (100w; 100w') comprises:
a base film (1w);
an information and heating layer (3w), comprising an information area (31w) and an electromagnetic induction heating ring (32w); and
a first adhesive layer (2w), located between the base film (1w) and the information and heating layer (3w);
wherein the information area (31w) has an antenna (312w) and a chip (311w) to be mutually conducted, and the electromagnetic induction heating ring (32w) surrounds the information area (31w) in a plan viewing angle.

10. The two-piece type closure liner (50; 100; 200; 300; 300'; 400; 500; 500') according to claim 9, wherein the wireless information integrated flake (100w') further comprises:
a protective layer (5w), located on one side of the information and heating layer (3w) away from the base film (1w); and
a second adhesive layer (4w), located between the information and heating layer (3w) and the protective layer (5w).

11. The two-piece type closure liner (50; 100; 200; 300; 300'; 400; 500; 500') according to claim 9, wherein a spacing is formed between the electromagnetic induction heating ring (32w) and the information area (31w).

12. The two-piece type closure liner (50; 100; 200; 300; 300'; 400; 500; 500') according to claim 9, wherein there is full of a spacing between the electromagnetic induction heating ring (32w) and the information area (31w).

13. The two-piece type closure liner (50; 100; 200; 300; 300'; 400; 500; 500') according to claim 11, wherein the spacing is a space between the outermost edge of the information area (31w) and the innermost edge of the electromagnetic induction heating ring (32w), and the space is 0.1mm to 3mm.

14. The two-piece type closure liner (50; 100; 200; 300; 300'; 400; 500; 500') according to claim 9, wherein the information and heating layer (3w) further comprises at least one physical connection bridge (33w), used to connect the information area (31w) and the electromagnetic induction heating ring (32w).

15. The two-piece type closure liner (50; 100; 200; 300; 300'; 400; 500; 500') according to claim 1, wherein the weak adhesive layer (2) and the sealing layer (32) therebetween further sequentially comprise:
a surface film (4), having a composition comprising at least one of the groups consisting of PP, PET, PE, PA, PEN and PI;
a bonding film (7), having a composition comprising at least one of the groups consisting of PET, PE, PP, PA, EPP and EPE; and
a strong adhesion layer (5A); in addition,
the two-piece type closure liner (500; 500') further comprises a release block (6A), the material of the release block (6A) is at least one selected from the group consisting of wax, gloss oil and silicone oil, and the release block (6A) is located on the lower surface of the bonding film (7) or located on the upper surface or the lower surface of the electromagnetic induction heating layer (31);
the strong adhesion layer (5A) is dry compound adhesive or hot melt lamination glue, and makes the peeling strength between the bonding film (7) and the electromagnetic induction heating layer (31) greater than 12N/15mm.
